Europäisches Patentamt

European Patent Office

Office européen des brevets

(19)

(11) **EP 0 615 624 B1**

(12) **EUROPÄISCHE PATENTSCHRIFT**

(45) Veröffentlichungstag und Bekanntmachung des Hinweises auf die Patenterteilung:
**06.11.1996 Patentblatt 1996/45**

(21) Anmeldenummer: **93920834.4**

(22) Anmeldetag: **28.09.1993**

(51) Int Cl.6: **G01S 7/52**, G01S 15/10

(86) Internationale Anmeldenummer:
**PCT/EP93/02630**

(87) Internationale Veröffentlichungsnummer:
**WO 94/08252 (14.04.1994 Gazette 1994/09)**

(54) **VERFAHREN ZUR EINSTELLUNG DER SENDEFREQUENZ BEI EINEM NACH DEM ECHOLOTPRINZIP ARBEITENDEN ENTFERNUNGSMESSGERÄT**

PROCESS FOR SETTING THE TRANSMISSION FREQUENCY IN A DISTANCE MEASURING EQUIPMENT WORKING ACCORDING TO THE ECHO-SOUNDING PRINCIPLE

PROCEDE DE REGLAGE DE LA FREQUENCE D'EMISSION DANS UN DISPOSITIF DE MESURE DE DISTANCE FONCTIONNANT SELON LE PRINCIPE DU SONDAGE ACOUSTIQUE PAR ECHO

(84) Benannte Vertragsstaaten:
**CH DK ES FR GB IT LI NL SE**

(30) Priorität: **02.10.1992 DE 4233257**

(43) Veröffentlichungstag der Anmeldung:
**21.09.1994 Patentblatt 1994/38**

(73) Patentinhaber: **ENDRESS + HAUSER GMBH + CO.
D-79689 Maulburg (DE)**

(72) Erfinder: **MICHALSKI, Bernhard
D-79689 Maulburg (DE)**

(74) Vertreter: **Leiser, Gottfried, Dipl.-Ing. et al
Prinz & Partner,
Manzingerweg 7
81241 München (DE)**

(56) Entgegenhaltungen:
**EP-A- 0 380 441        WO-A-90/08966
US-A- 4 905 208**

• **PATENT ABSTRACTS OF JAPAN vol. 12, no. 240 (P-727)8. Juli 1988 & JP,A,63 032 386 (HONDA DENSHI GIKEN) 12. Februar 1988**

**Beschreibung**

Die Erfindung betrifft ein Verfahren zur Einstellung der Sendefrequenz bei einem nach dem Echolotprinzip arbeitenden Entfernungsmeßgerät, das wenigstens einen elektroakustischen Wandler zur Aussendung von Schall- oder Ultraschallimpulsen und zur Umwandlung von empfangenen Schall- oder Ultraschallsignalen in elektrische Empfangssignale, einen in seiner Frequenz einstellbaren Oszillator zur Erzeugung eines elektrischen Signals mit der Sendefrequenz der auszusendenden Schall- oder Ultraschallimpulse für die Erregung des elektroakustischen Wandlers und eine Auswerteschaltung zur Ermittlung der Laufzeit der Schall- oder Ultraschallimpulse als Maß für die Entfernung eines Meßobjekts aufweist, wobei durch Analyse von für verschiedene Sendefrequenzen erhaltenen Empfangssignalen die optimale Sendefrequenz ermittelt und im Oszillator eingestellt wird.

Ein Verfahren dieser Art ist aus der PCT-Veröffentlichung WO 90/08966 bekannt. Gegenüber anderen bekannten Verfahren, bei denen die Sendefrequenz auf die Resonanzfrequenz des elektroakustischen Wandlers geregelt oder nach einer bekannten festgelegten Temperaturkennlinie des elektroakustischen Wandlers in Abhängigkeit von der Wandlertemperatur gesteuert wird, ergibt es den Vorteil, daß die gesamte Meßkette bestehend aus Sender, Ankopplung an den akustischen Raum, Laufweg zum reflektierenden Meßobjekt und zurück sowie Empfänger in die Ermittlung der Sendefrequenz mit einbezogen wird. Die in dieser Veröffentlichung beschriebenen Lösungen sind jedoch auf bestimmte Sonderfälle beschränkt. So soll zur Detektion von Echos im Ausschwingbereich des elektroakustischen Wandlers durch Analyse des Verhaltens von Wandler und Empfänger bei Über- oder Untertonfrequenzen in einem bestimmten Frequenzbereich die günstigste Über- oder Untertonfrequenz ermittelt werden, mit der das System dann betrieben wird; oder zur Detektion von Echos bei kleinem Signal/Rausch-Abstand sollen die das Rauschen beschreibenden Parameter ermittelt und die Impulsform und Trägerfrequenz der Sendeimpulse gemäß diesen Parametern verändert werden. Es sind jedoch keine konkreten Lösungen angegeben, wie die Analysen durchgeführt oder die Parameter bestimmt werden sollen, oder wie die Sendefrequenz in Abhängigkeit von den erzielten Ergebnissen bestimmt werden kann.

Aus US-A-4 905 208 ist es bekannt, die optimale Sendefrequenz dadurch zu ermitteln, daß innerhalb eines bestimmten Frequenzbandes die Sendefrequenz schrittweise erhöht und die zugehörige Empfangsamplitude ermittelt wird. Die Sendefrequenz mit maximaler Empfangsamplitude wird dann ausgewählt.

Aufgabe der Erfindung ist die Schaffung eines Verfahrens der eingangs angegebenen Art, das auf einfache Weise mit geringem Schaltungsaufwand eine Analyse der Empfangssignale ermöglicht, die unmittelbar die optimale Sendefrequenz ergibt.

Nach der Erfindung wird dies dadurch erreicht, daß während der Analyse der Empfangssignale in jedem auf die Aussendung eines Schall- oder Ultraschallimpulses folgenden Empfangsintervall das Amplituden-Zeit-Profil der Empfangssignale gebildet und integriert wird, daß die für verschiedene Sendefrequenzen erhaltenen Integrationswerte gespeichert werden, und daß als optimale Sendefrequenz im Oszillator die Frequenz eingestellt wird, für die der maximale Integrationswert erhalten wird.

Bei dem erfindungsgemäßen Verfahren kann vorteilhaft die Tatsache ausgenutzt werden, daß es bei neueren Verfahren zur Entfernungsmessung nach dem Echolotprinzip zunehmend üblich ist, das Amplituden-Zeit-Profil der Empfangssignale zu bilden und zur Ermittlung des Nutzechos sowie zur Bestimmung der Laufzeit dieses Nutzechos auszuwerten. Die hierfür vorhandenen Einrichtungen können unmittelbar auch für die Analyse der Empfangssignale nach dem erfindungsgemäßen Verfahren verwendet werden. Die zusätzlichen Maßnahmen beschränken sich dann darauf, die Amplituden-Zeit-Profile der für verschiedene Sendefrequenzen erhaltenen Empfangssignale zu integrieren und die Sendefrequenz zu bestimmen, für die der maximale Integrationswert erhalten wird. Diese Maßnahmen erfordern keinen zusätzlichen Schaltungsaufwand, wenn sie durch geeignete Programmierung des Computers realisiert werden, der im normalen Meßbetrieb die Auswerteschaltung bildet. Dies ist ohne weiteres möglich, da die Analyse der Empfangssignale zur Bestimmung der optimalen Sendefrequenz in besonderen Frequenzkontrollintervallen erfolgt, in denen keine Entfernungsmessung stattfindet. Die Frequenzkontrollintervalle können in größeren Zeitabständen liegen, da sich die Bedingungen für die optimale Sendefrequenz in der Regel nur langsam ändern.

Das erfindungsgemäße Verfahren ermöglicht es auch auf einfache Weise, den Einfluß des Rauschens auf die Analyse der Empfangssignale zu eliminieren, wenn der Rauschpegel so groß ist, daß er die Ermittlung der optimalen Sendefrequenz beeinträchtigt. In diesem Fall wird gemäß einer vorteilhaften Weiterbildung des erfindungsgemäßen Verfahrens die mittlere Rauschamplitude ermittelt und von dem Amplituden-Zeit-Profil der Empfangssignale abgezogen, bevor dieses integriert wird. Da das Rauschen von der Sendefrequenz unabhängig ist, braucht die mittlere Rauschamplitude für jede Bestimmung der optimalen Sendefrequenz nur einmal ermittelt zu werden.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels an Hand der Zeichnung. In der Zeichnung zeigen:

Fig. 1 das Blockschaltbild eines nach dem Echolotprinzip arbeitenden Entfernungsmeßgeräts, bei dem das erfindungsgemäße Verfahren angewendet wird, und

Fig. 2 ein detailliertes Blockschaltbild der im Entfernungsmeßgerät von Fig. 1 enthaltenen Frequenzsteuerschaltung.

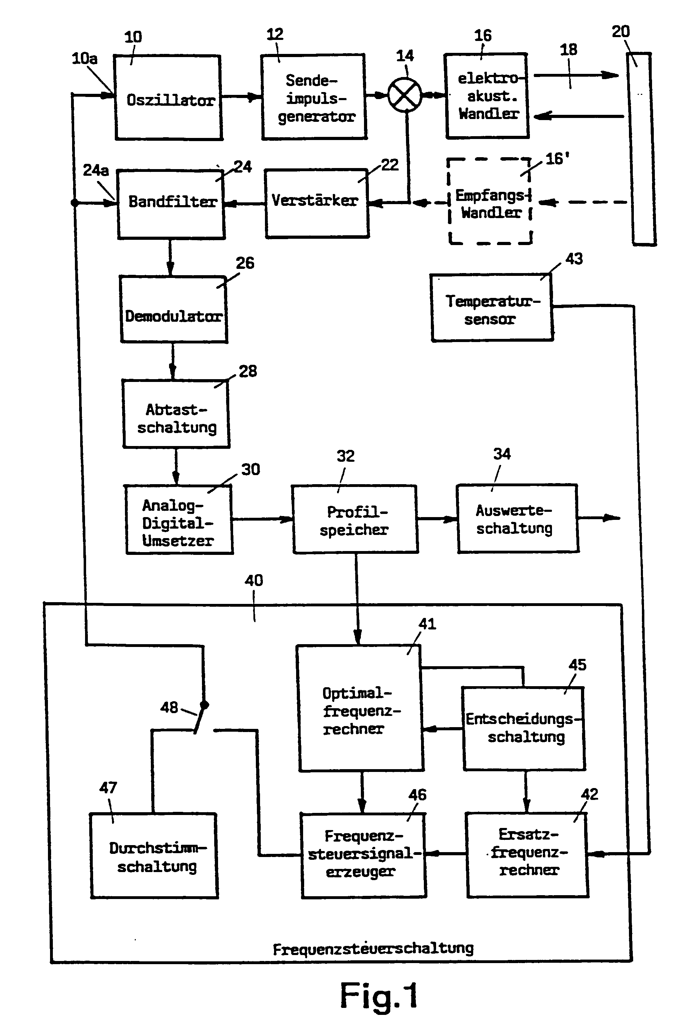

Das nach dem Echolotprinzip mit Schall- oder Ultraschallimpulsen arbeitende Entfernungsmeßgerät, dessen Blockschaltbild in Fig. 1 dargestellt ist, enthält einen Oszillator 10, dessen Frequenz durch ein seinem Steuereingang 10a zugeführtes Frequenzsteuersignal SF einstellbar ist. Der Ausgang des Oszillators 10 ist mit einem Sendeimpulsgenerator 12 verbunden, der periodische elektrische Sendeimpulse erzeugt, deren Dauer kurz gegen die Folgeperiode der Sendeimpulse ist und deren Trägerfrequenz die vom Oszillator 10 erzeugte Frequenz ist. Die Sendeimpulse werden über eine Sende-Empfangsweiche 14 einem elektroakustischen Wandler 16 zugeführt, der abwechselnd als Sendewandler und als Empfangswandler arbeitet. Der Wandler 16 wandelt jeden vom Sendeimpulsgenerator 12 gelieferten Sendeimpuls in einen Schall- oder Ultraschallimpuls um, der während eines Sendeintervalls vom Wandler 16 abgestrahlt wird. An jedes Sendeintervall schließt sich ein Empfangsintervall an, in dessen Verlauf der Wandler 16 alle von ihm empfangenen Schall- oder Ultraschallsignale in elektrische Empfangssignale umwandelt. Hierzu gehören insbesondere die Schall- oder Ultraschallwellen des Sendeimpulses, die nach Durchlaufen eines akustischen Laufwegs 18 an einem Meßobjekt 20, dessen Entfernung gemessen werden soll, oder von Störstellen reflektiert werden, aber auch Fremdsignale von anderen Quellen sowie Eigenschwingungen des Wandlers, insbesonders das Nachschwingen des Wandlers nach dem Ende des Sendeimpulses. Die Dauer des Empfangsintervalls muss größer als die doppelte Laufzeit der Schall- oder Ultraschallwellen vom Wandler 16 zum Meßobjekt 20 bei der größten vorkommenden Meßentfernung sein.

Die vom Wandler 16 während jedes Empfangsintervalls abgegebenen elektrischen Empfangssignale werden über die Sende-Empfangsweiche 14 dem Eingang eines Verstärkers 22 zugeführt. Die Sende-Empfangsweiche 14 verhindert, daß die vom Sendeimpulsgenerator 12 erzeugten Sendeimpulse direkt zum Eingang des Verstärkers 22 gelangen. Anstatt den Wandler 16 abwechselnd als Sendewandler und als Empfangswandler zu betreiben, ist es auch möglich, ihn nur als Sendewandler zu verwenden und einen zweiten elektroakustischen Wandler 16' als Empfangswandler vorzusehen, wie in Fig. 1 in gestrichelten Linien angedeutet ist. In diesem Fall entfällt die Sende-Empfangsweiche 14 und deren Verbindung mit dem Verstärker 22; statt dessen ist der Eingang des Verstärkers 22 an den Ausgang des Empfangswandlers 16' angeschlossen.

Die vom Verstärker 22 verstärkten Empfangssignale werden über ein schmalbandiges Bandfilter 24 übertragen, dessen Mittenfrequenz durch ein seinem Steuereingang 24a zugeführtes Steuersignal einstellbar ist. Der Steuereingang 24a des Bandfilters 24 empfängt das gleiche Frequenzsteuersignal $S_F$ wie der Steuereingang 10a des Oszillators 10, so daß die Mittenfrequenz des Bandfilters 24 immer exakt der Frequenz des Oszillators 10 und somit der Frequenz der vom Wandler 16 gesendeten Schall- oder Ultraschallimpulse entspricht. Das Bandfilter 24 hat die Aufgabe, die Empfangssignale mit der wirklich gesendeten Frequenz zu selektieren und alle Empfangssignale mit anderen Frequenzen zu unterdrücken.

Die vom Bandfilter 24 durchgelassenen Empfangssignale werden in einem Demodulator 26 demoduliert. Der Demodulator 26 gibt am Ausgang ein Signal ab, das der Hüllkurve der demodulierten Empfangssignale entspricht. Dem Demodulator 26 ist eine Abtastschaltung 28 nachgeschaltet, die aus dem Hüllkurvensignal im Verlauf jedes Empfangsintervalls eine Reihe von Abtastwerten entnimmt, die vorzugsweise in gleichen Zeitabständen liegen. Jeder Abtastwert hat die Amplitude des Hüllkurvensignals im Abtastzeitpunkt. Ein der Abtastschaltung 28 nachgeschalteter Analog-Digital-Umsetzer 30 setzt jeden Abtastwert in eine digitale Codegruppe um, die eine Zahl darstellt, deren Zahlenwert der Amplitude des Abtastwerts entspricht. Die vom Analog-Digital-Umsetzer 30 im Verlauf jedes Empfangsintervalls gelieferten digitalen Codegruppen werden in einen Profilspeicher 32 eingegeben und dort gespeichert. Diese gespeicherten Codegruppen stellen das Amplituden-Zeit-Profil der während eines Empfangsintervalls erhaltenen und vom Bandfilter 24 gefilterten Empfangssignale dar.

Mit dem Profilspeicher 32 ist eine Auswerteschaltung 34 verbunden, die die Aufgabe hat, in dem im Profilspeicher 32 gespeicherten Amplituden-Zeit-Profil das am Meßobjekt 20 reflektierte Nutzecho zu erkennen, die Laufzeit des Nutzechos zu bestimmen und aus dieser Laufzeit die Entfernung des Meßobjekts zu berechnen. Es sind verschiedene Lösungen dieser Aufgabe bekannt, die dem Fachmann geläufig sind.

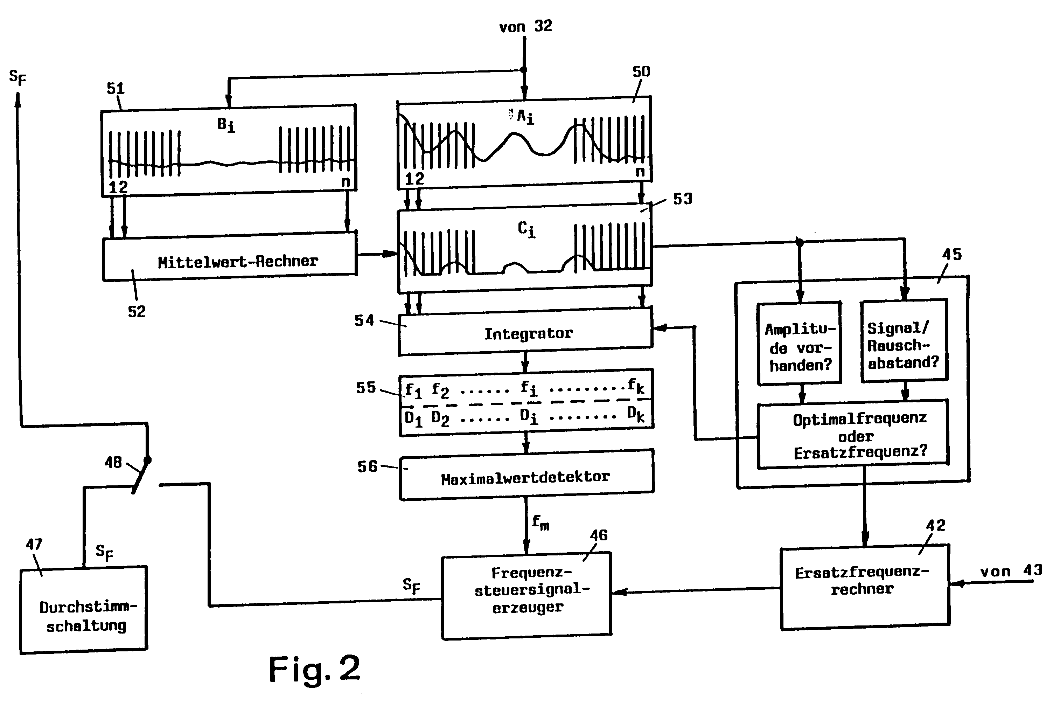

Ferner ist mit dem Profilspeicher 32 eine Frequenzsteuerschaltung 40 verbunden, die am Ausgang das Frequenzsteuersignal $S_F$ abgibt, das dem Steuereingang 10a des Oszillators 10 zugeführt wird. Zum besseren Verständnis der Funktionsweise der Frequenzsteuerschaltung, die später an Hand von Fig. 2 erläutert wird, ist in Fig. 1 dargestellt, daß die Frequenzsteuerschaltung 40 die folgenden Schaltungen enthält: einen mit dem Profilspeicher 32 verbundenen Optimalfrequenzrechner 41; einen Ersatzfrequenzrechner 42, der mit einem Temperatursensor 43 zur Messung der Temperatur des elektroakustischen Wandlers 16 verbunden ist; eine Entscheidungsschaltung 45, die auf Grund von Informationen, die sie vom Optimalfrequenzrechner 41 empfängt, entscheidet, ob eine vom Optimalfrequenzrechner 41 berechnete optimale Frequenz oder eine vom Ersatzfrequenzrechner 42 berechnete Ersatzfrequenz für die Erzeugung des Frequenzsteuersignals SF in einem Frequenzsteuersignalerzeuger 46 verwendet wird; eine Durchstimmschaltung 47; und einen Umschalter 48, der je nach seiner Stellung entweder das vom Frequenzsteuersignalerzeuger 46 erzeugte Frequenzsteuersignal $S_F$ oder ein von der Durchstimmschaltung 47 erzeugtes Frequenzsteuersignal $S_F$ zum Oszillator 10 überträgt. Diese Schaltungen sind jedoch normalerweise in der Frequenzsteuerschaltung nicht konkret vorhanden; vielmehr ist die Frequenzsteuerschaltung 40 vorzugsweise durch einen Mikrocomputer gebildet, der so programmiert ist, daß er die Funktionen der erwähnten Schaltungen ausführt. Hierfür kann der Mikrocomputer verwendet werden, der im Meßbetrieb die Auswerteschaltung 34 bildet.

Die Bestimmung der im Oszillator 10 einzustellenden Sendefrequenz erfolgt in besonderen Frequenzkontrollintervallen, in denen keine Entfernungsmessung stattfindet. Hierbei wird die Tatsache ausgenutzt, daß sich die für die optimale Sendefrequenz maßgeblichen Bedingungen, wenn überhaupt, nur langsam ändern, so daß es nach einer ersten Bestimmung der optimalen Sendefrequenz genügt, diese in größeren Zeitabständen zu überprüfen und gegebenenfalls zu korrigieren.

Während jedes Frequenzkontrollintervalls ist der Umschalter 48 so eingestellt, das das Frequenzsteuersignal $S_F$ von der Durchstimmschaltung 47 geliefert wird. Die Durchstimmschaltung 47 veranlaßt eine stufenweise Änderung der Sendefrequenz, ausgehend von einer Startfrequenz. Für jede eingestellte Frequenz wird ein Sendeimpuls ausgesendet, und die für diesen Sendeimpuls erhaltenen Empfangssignale werden in der später beschriebenen Weise bewertet. Die für die verschiedenen Frequenzen erhaltenen Bewertungen werden gespeichert und am Ende des Frequenzkontrollintervalls miteinander verglichen. Die Frequenz, für die die beste Bewertung erhalten worden ist, wird dann für die Erzeugung des Frequenzsteuersignals im Frequenzsteuersignalerzeuger 46 verwendet. Wenn es in bestimmten Fällen nicht möglich ist, eine optimale Sendefrequenz durch Bewertung der Empfangssignale zu ermitteln, veranlaßt die Entscheidungsschaltung 45, daß ersatzweise eine vom Ersatzfrequenzrechner 42 berechnete Ersatzfrequenz für die Erzeugung des Frequenzsteuersignals im Frequenzsteuersignalerzeuger 46 verwendet wird. Am Ende des Frequenzkontrollintervalls wird der Umschalter 48 in die andere Stellung gebracht, so daß nunmehr das vom Frequenzsteuersignalerzeuger 46 gelieferte Frequenzsteuersignal $S_F$ die im Oszillator 10 eingestellte Sendefrequenz bis zum nächsten Frequenzkontrollintervall bestimmt.

Die Funktionsweise des Frequenzsteuerschaltung 40 von Fig. 1 wird an Hand des detaillierten Blockschaltbilds von Fig. 2 erläutert. Der Schaltungsblock 50 repräsentiert einen Profilspeicher, in den im Verlauf jedes Frequenzkontrollintervalls der Reihe nach die im Profilspeicher 32 gespeicherten Amplituden-Zeit-Profile der Empfangssignale übertragen werden. Im Schaltungsblock 50 ist schematisch ein Amplituden-Zeit-Profil von Empfangssignalen dargestellt, die in einem Empfangsintervall nach der Aussendung eines Sendeimpulses mit einer durch die Durchstimmschaltung 47 bestimmten Sendefrequenz empfangen worden sind. Die durchgezogene Kurve ist die Hüllkurve der Empfangssignale, und die vertikalen Striche repräsentieren die im Profilspeicher gespeicherten Codegruppen $A_1$, $A_2$, ... $A_i$, ..., $A_n$ der digitalisierten Abtastwerte, die aus der Hüllkurve entnommen worden sind. Jede Codegruppe stellt eine digitale Zahl dar, deren Zahlenwert der Amplitude der Hüllkurve an der betreffenden Stelle entspricht.

Zur Ermittlung der optimalen Sendefrequenz kann das im Profilspeicher 50 gespeicherte Amplituden-Zeit-Profil unmittelbar integriert werden, wenn der Rauschpegel so niedrig ist, daß er nicht störend in Erscheinung tritt. In Fig. 2 ist eine zusätzliche Maßnahme dargestellt, die bei höherem Rauschpegel angewendet wird, um den Einfluß des Rauschens auf die Ermittlung der optimalen Sendefrequenz zu eliminieren. Diese Maßnahme besteht darin, die mittlere Rauschamplitude zu bestimmen und von dem Amplituden-Zeit-Profil der Empfangssignale zu subtrahieren, bevor dieses integriert wird. Da die mittlere Rauschamplitude von der Sendefrequenz unabhängig ist und sich im Verlauf des Frequenzkontrollintervalls nicht wesentlich ändert, genügt es, sie am Beginn jedes Frequenzkontrollintervalls einmal zu bestimmen und für die Dauer des Frequenzkontrollintervalls zu speichern. Die Bestimmung der mittleren Rauschamplitude könnte dadurch erfolgen, daß sie in einem Zeitintervall gemessen wird, in dem mit Sicherheit nur Rauschsignale vorhanden sind. In Fig. 2 ist eine andere Möglichkeit zur Bestimmung der mittleren Rauschamplitude dargestellt. Sie besteht darin, daß das Amplituden-Zeit-Profil der Empfangssignale in einem Empfangsintervall aufgenommen wird, vor dem kein Sendeimpuls ausgesendet worden ist, so daß die Empfangssignale nur aus den Rauschsignalen bestehen. Zum besseren Verständnis ist in Fig. 2 angenommen, daß dieses Amplituden-Zeit-Profil in einen zweiten Profilspeicher übertragen wird, der durch einen Schaltungsblock 51 repräsentiert ist. Im Schaltungsblock 51 sind in entsprechender Weise wie im Schaltungsblock 50 die in diesem Fall erhaltene Hüllkurve sowie die im Profilspeicher gespeicherten Codegruppen $B_1$, $B_2$, .., $B_i$, .., $B_n$ der digitalisierten Abtastwerte der Hüllkurve dargestellt. Mit dem Profilspeicher 51 ist ein Mittelwert-Rechner 52 verbunden, der den Mittelwert der im Profilspeicher 51 gespeicherten Amplitudenwerte berechnet; dies geschieht durch einfache Addition der durch die gespeicherten Codegruppen dargestellten Zahlenwerte und Division der Summe durch die Anzahl der Codegruppen:

$$B_m = (\sum_{1-n} B_i)/n$$

Das Ergebnis $B_m$ ist der Mittelwert der Rauschamplitude, der in Form einer digitalen Codegruppe im Mittelwert-Rechner 52 gespeichert wird und während des ganzen Frequenzkontrollintervalls zur Verfügung steht.

Das im Profilspeicher 50 stehende Amplituden-Zeit-Profil wird in einen Profilspeicher 53 überführt, wobei gleichzeitig von jedem gespeicherten Amplitudenwert die mittlere Rauschamplitude abgezogen wird. Somit repräsentieren die im Profilspeicher 53 gespeicherten Codegruppen $C_1, C_2 .., C_i, .., C_n$ die Amplitudenwerte

$$C_i = A_i - B_m$$

Im Schaltungsblock 53 ist auch die diesen Amplitudenwerten entsprechende Hüllkurve dargestellt, die der Differenz zwischen dem Amplituden-Zeit-Profil der Empfangssignale und der mittleren Rauschamplitude entspricht.

Die Überführung des Amplituden-Zeit-Profils der Empfangssignale in den Profilspeicher 50 und die Bildung des Differenz-Profils im Profilspeicher 53 wiederholt sich für jede während eines Frequenzkontrollintervalls von der Durchstimmschaltung 47 eingestellte Sendefrequenz $f_1, .., f_i, .., f_k$. Dagegen erfolgt die Bildung des Amplituden-Zeit-Profils der Rauschsignale im Profilspeicher 51 und die Berechnung der mittleren Rauschamplitude in der Rechenschaltung 52 nur einmal am Beginn jedes Frequenzkontrollintervalls.

Für jede Sendefrequenz $f_i$ bildet ein Integrator 54 das Integral des im Profilspeicher 53 stehenden Amplituden-Zeit-Profils. Dies geschieht einfach durch Summierung der Zahlenwerte der gespeicherten Codegruppen:

$$D_i = \sum_{1-n} C_i$$

Jeder auf diese Weise erhaltene Integrationswert $D_i$ wird zusammen mit der zugehörigen Frequenz $f_i$ in einem Speicher 55 gespeichert.

Am Ende jedes Frequenzkontrollintervalls ermittelt ein Maximalwertdetektor 56 unter den im Speicher 55 stehenden Integrationswerten $D_1 .., D_i, .., D_k$ denjenigen mit dem größten Wert, und er überträgt die diesem maximalen Integrationswert Dm zugeordnete Frequenz $f_m$ zu dem Frequenzsteuersignalerzeuger 46, der ein Frequenzsteuersignal $S_F$ erzeugt, das im Oszillator 10 die Einstellung der Frequenz $f_m$ als optimale Sendefrequenz bewirkt.

Diese Vorgänge laufen jedoch nur dann in der beschriebenen Weise ab, wenn sie von der Entscheidungsschaltung 45 zugelassen werden. Die Entscheidungsschaltung 45 prüft für jedes im Profilspeicher 53 gebildete Differenzprofil, ob dieses Echosignale mit ausreichenden Amplitudenwerten enthält und ob ein ausreichend großer Signal/Rausch-Abstand besteht. Sobald für ein Differenzprofil eine dieser beiden Bedingungen nicht erfüllt ist, blockiert die Entscheidungsschaltung 45 die Berechnung des Integrationswertes durch den Integrator 54. Sie veranlaßt die Berechnung einer Ersatzfrequenz durch den Ersatzfrequenzrechner 43 und beendet das Frequenzkontrollintervall. Der Frequenzsteuersignalerzeuger 46 erzeugt ein Frequenzsteuersignal SF, das im Oszillator die Einstellung der Ersatzfrequenz als Sendefrequenz bewirkt. Für die Berechnung der Ersatzfrequenz bestehen verschiedene Möglichkeiten, deren Wahl dem Fachmann überlassen bleibt. Wenn zuvor noch keine optimale Sendefrequenz ermittelt und eingestellt werden konnte, kann die Ersatzfrequenz auf Grund der mittels des Temperatursensors 43 gemessenen Temperatur des elektroakustischen Wandlers und einer im Ersatzfrequenzrechner gespeicherten Temperaturkennlinie des Wandlers berechnet werden. Wenn jedoch zuvor bereits eine optimale Sendefrequenz ermittelt worden ist, kann diese frühere Sendefrequenz als Ersatzfrequenz beibehalten werden.

Wenn kein Rauschen vorhanden ist, ist die mittlere Rauschamplitude Null. In diesem Fall ist das im Profilspeicher 53 gebildete Differenzprofil mit dem Amplituden-Zeit-Profil im Profilspeicher 50 identisch, und der Integrator 54 integriert dieses Amplituden-Zeit-Profil. Es ist daher insbesondere bei niedrigen Rauschpegeln grundsätzlich möglich, auf die Ermittlung und Subtraktion des mittleren Rauschpegels zu verzichten, was bei dem Ausführungsbeispiel von Fig. 2 einfach dadurch geschehen kann, daß die Schaltungen 51, 52 und 53 fortgelassen werden. Eine andere Möglichkeit besteht darin, daß die Entscheidungsschaltung 45 auf Grund des ermittelten Signal/Rausch-Abstandes bestimmt, ob die mittlere Rauschamplitude ermittelt und von dem Amplituden-Zeit-Profil subtrahiert wird oder nicht.

**Patentansprüche**

1. Verfahren zur Einstellung der Sendefrequenz bei einem nach dem Echolotprinzip arbeitenden Entfernungsmeßgerät, das wenigstens einen elektroakustischen Wandler zur Aussendung von Schall- oder Ultraschallimpulsen und zur Umwandlung von empfangenen Schall- oder Ultraschallsignalen in elektrische Empfangssignale, einen in seiner Frequenz einstellbaren Oszillator zur Erzeugung eines elektrischen Signals mit der Sendefrequenz der auszusendenden Schall- oder Ultraschallimpulse für die Erregung des elektroakustischen Wandlers und eine Auswerteschaltung zur Ermittlung der Laufzeit der Schall- oder Ultraschallimpulse als Maß für die Entfernung eines Meßobjekts aufweist, wobei durch Analyse von für verschiedene Sendefrequenzen erhaltenen Empfangssignalen die optimale Sendefrequenz ermittelt und im Oszillator eingestellt wird, dadurch gekennzeichnet, daß während der Analyse der Empfangssignale in jedem auf die Aussendung eines Schalloder Ultraschallimpulses folgenden Empfangsintervall das Amplituden-Zeit-Profil der Empfangssignale gebildet und integriert wird, daß die für verschiedene Sendefrequenzen erhaltenen Integrationswerte gespeichert werden, und daß als optimale Sendefrequenz im Oszillator die Frequenz eingestellt wird, für die der maximale Integrationswert erhalten wird.

2. Verfahren nach Anspruch 1, dadurch gekennzeichnet, daß zur Bildung jedes Amplituden-Zeit-Profils die Hüllkurve der Empfangssignale abgetastet wird, daß die Abtastwerte digitalisiert werden und daß die digitalisierten Abtastwerte gespeichert werden.

3. Verfahren nach Anspruch 1 oder 2, dadurch gekennzeichnet, daß die mittlere Rauschamplitude der Empfangssignale ermittelt wird und daß die Differenz zwischen dem Amplituden-Zeit-Profil der Empfangssignale und der mittleren Rauschamplitude integriert wird.

4. Verfahren nach Anspruch 3, dadurch gekennzeichnet, daß die Rauschamplitude der Empfangssignale zu einer Zeit gemessen wird, zu der keine von einem ausgesendeten Schalloder Ultraschallimpuls stammenden Echosignale empfangen werden.

5. Verfahren nach Anspruch 3, dadurch gekennzeichnet, daß zur Ermittlung der mittleren Rauschamplitude das Amplituden-Zeit-Profil der Empfangssignale in einem Empfangs intervall gebildet wird, vor dem keine Aussendung eines Schall- oder Ultraschallimpulses erfolgt ist, und daß die Amplitudenwerte des Amplituden-Zeit-Profils gemittelt werden.

6. Verfahren nach einem der vorhergehenden Ansprüche, dadurch gekennzeichnet, daß die Empfangssignale vor der Bildung des Amplituden-Zeit-Profils durch ein auf die Frequenz des Oszillators abgestimmtes Bandfilter geschickt werden.

7. Verfahren nach einem der vorhergehenden Ansprüche, dadurch gekennzeichnet, daß die Analyse der Empfangssignale zur Bestimmung der optimalen Sendefrequenz in Frequenzkontrollintervallen durchgeführt wird, in denen keine Entfernungsmessung stattfindet.

8. Verfahren nach Anspruch 7, dadurch gekennzeichnet, daß in jedem Frequenzkontrollintervall die Sendefrequenz ausgehend von einer Startfrequenz in einem vorbestimmten Frequenzbereich stufenweise geändert wird.

9. Verfahren nach einem der vorhergehenden Ansprüche, dadurch gekennzeichnet, daß im Oszillator eine Ersatzfrequenz eingestellt wird, wenn die Bestimmung der optimalen Sendefrequenz durch Analyse der Empfangssignale nicht möglich ist.

10. Verfahren nach Anspruch 9, dadurch gekennzeichnet, daß die Ersatzfrequenz auf Grund einer Messung der Temperatur des elektroakustischen Wandlers nach einer vorgegebenen Temperaturkennlinie des Wandlers bestimmt wird.

## Claims

1. A process for setting the transmission frequency of a distance measuring instrument operating according to the echo-sounding principle, including at least one electro-acoustic transducer for emitting sonic or ultrasonic pulses and for converting received sonic or ultrasonic signals into electric received signals, a frequency-adjustable oscillator for generating an electric signal having the transmission frequency of the sonic or ultrasonic pulses which are to be transmitted for activating the electro-acoustic transducer, and an evaluation circuit for determining the travelling time of the sonic or ultrasonic pulses as a measure of the distance of a target object, the optimum transmission frequency being determined and tuned in the oscillator by analysing received signals obtained at different transmission frequencies, characterised in that during the analysis of the received signals in each reception interval following the emission of a sonic or ultrasonic pulse the amplitude-time-profile of the received signals is formed and integrated, that the integrated values obtained for different transmission frequencies are stored and that the frequency at which the maximum integrated value is attained is set in the oscillator as the optimum transmission frequency.

2. A process according to claim 1, characterised in that the envelope of the received signals is scanned in order to form each amplitude-time-profile, that the scanned values are digitised and that the digitised scanned values are stored.

3. A process according to claim 1 or 2, characterised in that the mean noise amplitude of the received signals is determined and that the difference between the amplitude-time-profile of the received signals and the mean noise amplitude is integrated.

4. A process according to claim 3, characterised in that the noise amplitude of the received signals is determined at a time at which no echo signals attributable to a transmitted sonic or ultrasonic pulse are received.

5.    A process according to claim 3, characterised in that for determining the mean noise amplitude the amplitude-time-profile of the received signals is formed during a receiving interval prior to which no emission of a sonic or ultrasonic pulse has occurred, and that the mean amplitude values of the amplitude-time-profile are determined.

6.    A process according to any one of the preceding claims, characterised in that the received signals are passed through a band filter tuned to the frequency of the oscillator prior to the formation of the amplitude-time-profile.

7.    A process according to any one of the preceding claims, characterised in that the analysis of the received signals for the determination of the optimum transmission frequency is conducted during frequency control intervalls during which no distance measurement takes place.

8.    A process according to claim 7, characterised in that the transmission frequency is adjusted stepwise during each frequency control interval, within a predetermined frequency range commencing from a starting frequency.

9.    A process according to any one of the preceding claims, characterised in that a substitute frequency is set in the oscillator whenever the determination of an optimum transmission frequency by analysis of the received signals is not feasible.

10.   A process according to claim 9, characterised in that the substitute frequency is determined on the basis of a measurement of the temperature of the electro-acoustic transducer as a function of a given temperature characteristic of the transducer.

**Revendications**

1.    Procédé de réglage de la fréquence d'émission d'un appareil de mesure à distance fonctionnant suivant le principe de l'écho-sonde, appareil comportant au moins :

-     un transducteur électroacoustique servant à l'émission d'impulsions sonores ou ultrasonores et à transformer des signaux sonores ou ultrasonores reçus, en signaux de réception électriques,
-     un oscillateur ayant sa fréquence réglable, servant à produire un signal électrique au moyen de la fréquence d'émission des impulsions sonores ou ultra-sonores à émettre pour l'excitation du transducteur électroacoustique et
-     un circuit de traitement servant à calculer la durée de propagation des impulsions sonores ou ultra-sonores, durée considérée comme mesure pour la distance par rapport à un objet de mesure,

      la fréquence d'émission optimale étant calculée par l'analyse de signaux de réception reçus pour différentes fréquences d'émission et étant réglée dans l'oscillateur,
      caractérisé en ce que, pendant l'analyse des signaux de réception dans chacun des intervalles de réception faisant suite à l'émission d'une impulsion sonore ou ultrasonore, le profil d'amplitude-temps des signaux de réception est formé et intégré,
      en ce que les valeurs d'intégration obtenues pour différentes fréquences d'émission sont mémorisées, et
      en ce que la fréquence considérée comme fréquence d'émission optimale est réglée dans l'oscillateur, fréquence pour laquelle la valeur d'intégration maximale est obtenue.

2.    Procédé selon la revendication 1, caractérisé en ce que l'enveloppe des signaux de réception est analysée pour la formation de chaque profil d'amplitude-de-temps, en ce que les valeurs d'analyse sont numérisées et en ce que les valeurs d'analyse numérisées sont mémorisées.

3.    Procédé selon la revendication 1 ou 2, caractérisé en ce que l'amplitude moyenne de bruit des signaux de réception est calculée et en ce que l'on intègre la différence entre le profil d'amplitude-temps des signaux de réception et l'amplitude moyenne de bruit.

4.    Procédé selon la revendication 3, caractérisé en ce que l'amplitude de bruit des signaux de réception est mesurée en un temps pendant lequel aucun des signaux d'écho provenant d'une impulsion sonore ou ultrasonore émise n'est reçu.

5.    Procédé selon la revendication 3, caractérisé en ce que, pour calculer l'amplitude moyenne de bruit, le profil d'amplitude-temps des signaux de réception est formé dans un intervalle de réception en amont duquel il ne se produit aucune émission d'impulsion sonore ou ultrasonore, et en ce que l'on calcule la moyenne des valeurs d'amplitude du profil d'amplitude-temps.

6.    Procédé selon l'une quelconque des revendications précédentes, caractérisé en ce que les signaux de réception sont envoyés en passant par un filtre de bande réglé sur la fréquence de l'oscillateur, avant la formation du profil d'amplitude-temps.

7. Procédé selon l'une quelconque des revendications précédentes, caractérisé en ce que l'analyse des signaux de réception est effectuée afin de déterminer la fréquence d'émission optimale dans les intervalles de contrôle de la fréquence pendant lesquels aucune mesure à distance ne se produit.

8. Procédé selon la revendication 7, caractérisé en ce que, dans chaque intervalle de contrôle de la fréquence, la fréquence d'émission est modifiée, à partir d'une fréquence initiale, graduellement dans une plage de fréquences déterminées.

9. Procédé selon l'une quelconque des revendications précédentes, caractérisé en ce qu'une fréquence de remplacement est réglée dans l'oscillateur lorsqu'il n'est pas possible de déterminer la fréquence d'émission optimale par l'analyse des signaux de réception.

10. Procédé selon la revendication 9, caractérisé en ce que la fréquence de remplacement est déterminée sur la base d'une mesure de la température du transducteur électroacoustique suivant une courbe de températures donnée du transducteur.

Fig.1

Fig. 2

EP 0 615 624 B1